# EUROPEAN PATENT APPLICATION

(11) **EP 4 079 573 A1**
(43) Date of publication of application: **26.10.2022**
(21) Application number: 22159458.3
(22) Date of filing: 01.03.2022
(51) Int. Cl.: B60P 1/54

(54) **TRUCK EQUIPPED WITH A SELF-LOADER CRANE AND A SELF-LOADER CRANE APPLICABLE THEREBY AND USE THEREOF**

(30) Priority: 22.04.2021 BE 202105313
(71) Applicant: WERKHUIZEN JACOBS, besloten vennootschap met beperkte aansprakelijkheid, 3560 Lummen (BE)
(72) Inventor: JACOBS, Patrick, 3560 Lummen (BE); LENAERTS, Erik, 3990 Peer (BE)
(74) Representative: De Clercq, Krista

(57) **Abstract**

Truck provided with a chassis (4) and a foldable self-loader crane (1) and a front and rear support leg unit (5-16), whereby the self-loader crane (1) is provided with a bearing structure (2), either at the front or at the rear of the chassis and with a crane column (10) which is provided with a boom (11) which is at least partially foldable into a stowed position next to the crane column (10) on the so-called stowage side (13) of the crane column (10),
**characterised in that:**
- in the case that the self-loader crane (1) is front-mounted, the stowage side (13) of the self-loader crane (1) in the stowed position is oriented to the front toward the cab (15) and the front support leg unit (5) is located on the stowage side (13) relative to the crane column (10) between the cab (15) and the crane column (10), and,
- in the case that the self-loader crane (1) is rear-mounted, the stowage side (13) of the self-loader crane (1) in its stowed position is oriented toward the rear and the rear support leg unit (5) is located on the stowage side (13) relative to the crane column (10).

## Description

The present invention relates to a truck equipped with a self-loader crane and to such self-loader crane.

Typically, a hydraulic self-loader crane is provided with a bearing structure with which the self-loader crane can be mounted to the chassis of the truck by means of an auxiliary frame, the bearing structure of the truck being provided with a pivotable crane column to which a boom is mounted for loading and unloading loads.

The boom is articulated with hinged elements that can be folded out for loading and unloading loads at a distance from the truck.

Typically, the crane column is mounted eccentrically relative to the width of the truck in such a way that, before driving, the boom can be folded up sideways in the transversal direction of the truck on one side of the crane column to remain within the width of the truck in stowed position.

In said stowed position the folded up boom is always located on one side of the crane column.

Hereinafter, the side of the boom along which the boom is folded up will be referred to as the stowage side of the crane column.

The crane column of such conventional self-loader crane is also provided with a support leg unit with extendable beams which in the case of a mounted self-loader crane can be extended in a direction transverse to the longitudinal direction of the truck to thus give more stability to the truck when loading and unloading and to be able to hoist loads without the risk of the truck toppling.

In heavier cranes the truck is also provided with a second separate support leg unit at a distance from the support leg unit of the self-loader crane, whereby said second support leg unit is also provided with beams that are extendable in the transversal direction of the truck.

The beams of the support legs are retracted before driving.

The self-loader crane can be compactly folded up transversely across the chassis of the truck up into the stowed position whereby the self-loader crane does not extend beyond the width of the truck, for example when driving with the crane in said position.

In the known self-loader cranes for front- or rear-mounting of the truck, the self-loader crane is provided with an integrated support leg beam which relative to the crane column is located on the opposite side of the stowage side, in other words on the other side of the boom in its folded up condition.

In the folded up condition the boom is substantially located in a transversal direction of the truck, in other words in a direction substantially parallel to the vertical plane through the support legs of the self-loader crane.

Hereinafter, the description relates to a truck-mounted self-loader crane whereby the boom is folded up in its stowed position.

In the design of the existing self-loader cranes, the support leg beam is mounted eccentrically relative to the crane column but as close as possible to said centre in order to take up as little space as possible in the longitudinal direction of the truck to leave as much useful loading length of the chassis as possible.

In a first known type of a truck-mounted self-loader crane, the self-loader crane is front-mounted, as close as possible against the cab with the folded up boom on the rear of the crane column and the support leg beam on the front thereof or vice versa.

In this known mounting, a number of problems occur due to the placement of the self-loader crane relatively far to the front and the short distance of the support leg beam relative to the crane column in the longitudinal direction of the truck, namely that:
- the stability to the front in heavy cranes when loading and unloading is poor, such that the permitted hoisting capacity of loads to be hoisted at the front of the cab is more limited, and;
- there is a risk of overloading the front axle.

Some constructors resort to placing an extra support leg at the front of the cab, which requires a reinforcement of the chassis of the truck, in so far this is constructively possible, which makes it extra expensive.

The extra weight also has a negative effect on the truck's loading capacity.

In addition, an extra counter weight is then sometimes rear-mounted to increase the stability to the front. This solution also results in a lower loading capacity and involves extra costs.

Yet another, more exclusive and expensive solution to increase the stability consists in having the support leg beam not extend transversely but diagonally forward relative to the longitudinal direction of the truck.

Apart from the fact that said solution is expensive, yet another disadvantage is that a lot of room is needed to outrig the truck on its support legs and that it is not possible to extend the support beams in a transversal direction in, for example, narrow side streets or between containers.

In a second known type of truck-mounted self-loader crane, the self-loader crane is mounted completely at the rear, as far as possible toward the back on the chassis, with the folded up boom on the front side of the crane column and the support leg beam at the back thereof or vice versa.

In this case the stability in heavy cranes is poor when loading and unloading loads behind the truck and the front axle of the truck may be underloaded with a folded up crane in unloaded condition, knowing that the load of the front axle legally must amount to at least 20% of the total weight of the truck.

In this case too solutions exist with the addition of an extra support leg at the back or an extra counter weight at the front or support legs placed diagonally to the back, with corresponding disadvantages as described above for front-mounting.

The purpose of the present invention is to provide a solution to one or more of the aforementioned and other disadvantages.

To this end, the invention relates to a truck provided with a chassis, a foldable hydraulic self-loader crane and a front and a rear support leg unit with support legs on beams which are slidably expandable and retractable, substantially in the transversal direction of the truck, whereby the self-loader crane is provided with a bearing structure with which the self-loader crane is mounted to the chassis of the truck, either at the front behind the cab or completely at the rear in the direction of travel, whereby the self-loader crane is provided with a crane column which is mounted pivotably on the bearing structure and is provided with an articulated boom which before driving is at least partially foldable into a stowed position next to the crane column on the so-called stowage side of the crane column, whereby the boom is folded up transversely across the direction of travel of the truck, characterised in that:
- in the case that the self-loader crane is front-mounted, the stowage side of the self-loader crane in stowed position is oriented to the front toward the cab and the front support leg unit is located on the stowage side relative to the crane column between the cab and the crane column, and,
- in the case that the self-loader crane is rear-mounted, the stowage side of the self-loader crane is oriented toward the back in its stowed position and the rear support leg unit is located on the stowage side relative to the crane column.

By placing the support leg beam on the other side of the crane column than the folded up boom, the support leg beam can be provided further from the centre of the crane column whereby the total mounting length taken up by the self-loader crane in the longitudinal direction of the truck is not or is only marginally greater than in conventional mounting, as in this case the mounting length of the folded up boom and associated mounting parts, such as for example a coiler, can be used to provide the support leg beam in the longitudinal direction of the truck further away from the crane column.

As a result, the available length of the chassis for the transport of a useful load is not restricted or only to a limited extent, or can even be greater, as no support leg beam is needed according to the invention on the opposite side of the stowage side of the crane column which is the case in a conventional mounting.

The effect of front-mounting is that a better forward stability and better axle load at the front are obtained and this without other extra stability increasing features, and thus without extra support legs at the front, without extra counter weight at the rear or without significantly increasing the length of the vehicle.

The effect of rear-mounting is a better rearward stability and better axle load at the front in unloaded condition and this without extra other stability increasing features, and thus without extra support legs at the rear, without extra counter weight at the front, without changing the setting of the air pressures of the suspension, without significantly increasing the length of the vehicle.

Support legs on beams extending laterally, substantially in the transversal direction of the truck, are understood to mean beams of the support leg unit enclosing an angle between 80° and 100° with the longitudinal direction of the truck, unlike some known applications with beams that form an angle of, for example 45°, or more to obtain greater stability.

Preferably, the truck is only equipped with a front and a rear support leg unit, whereby in the case of a front-mounted self-loader crane, the front support leg unit is located between the crane column and the cab, and whereby in the case of a rear-mounted self-loader crane, the rear support leg unit is located in the direction of travel behind the crane column.

Preferably, the support leg unit nearest to the crane column is situated under the folded up boom and associated mounting parts, i.e. vertically below within the mounting length of the folded up boom in driving condition or partially within or completely outside.

Preferably, said support leg beam is removed as far as possible from the centre of the crane column in the longitudinal direction of the truck for maximum stability.

By using the space that is inevitably always lost due to the folded up boom and mounting parts, a maximum of stability can be obtained without having to give up too much useful loading space.

The invention also relates to a self-loader crane for application in a truck as described above whereby in the stowed position of the self-loader crane the support leg unit is located on the stowage side of the crane column.

Preferably, the support leg unit is integrated in the bearing structure of the self-loader crane.

The invention also relates to the use of a conventional self-loader crane for obtaining a truck as described above, departing from a conventional self-loader crane with a bearing structure for mounting on the truck and a crane column which is pivotably mounted to the bearing structure and which is provided with an articulated boom which is at least partially foldable into a stowed position next to the crane column on the so-called stowage side of the crane column and the conventional self-loader crane is further provided with a support leg unit on the other side of the crane column than the stowage side and parallel to the folded up boom in its stowed position, characterised in that said conventional self-loader crane:
- is either front-mounted on the chassis, just behind the cab such that the self-loader crane with its folded up boom in stowed position is located between the crane column and the cab and a replacement support leg unit is further provided which is mounted transversely to the direction of travel between the crane column and the cab;
- or is completely rear-mounted on the chassis such that the stowage side of the self-loader crane is oriented to the rear and a replacement support leg unit is further provided which is mounted transversely to the direction of travel on the stowage side of the crane column.

Preferably, a part of the support unit of the conventional self-loader crane can be recovered for the replacement support leg unit for mounting in the replacement support leg unit.

With the intention of better showing the characteristics of the invention, a few preferred embodiments of a truck and a self-loader crane according to the invention are described hereinafter by way of an example, without any limiting nature, with reference to the associated drawings, wherein:
figure 1 shows a side view of a conventional self-loader crane according to the state of the art and this in folded up driving condition;
figure 2 shows a view according to the arrow F2 in figure 1;
figure 3 shows a top view according to arrow F3 in figure 1;
figure 4 shows the self-loader crane of figure 1 in a partially folded out condition;
figures 5 and 6 show a truck with the self-loader crane of figure 1 in a conventional mounting, respectively at the front and the rear;
figure 7 shows a self-loader crane according to the invention according to the same side view as that of figure 1;
figures 8 and 9 show a truck according to the invention with the self-loader crane of figure 7 in a front- and rear-mounting respectively.

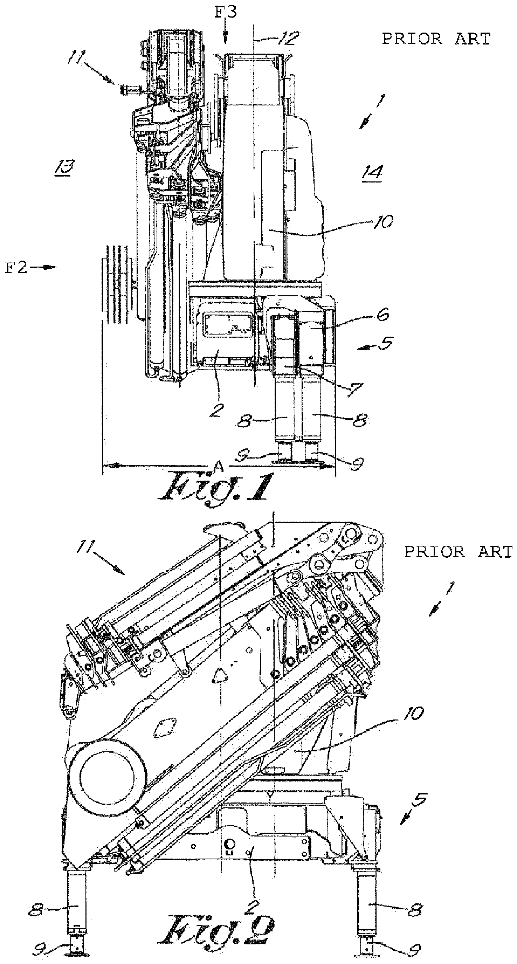

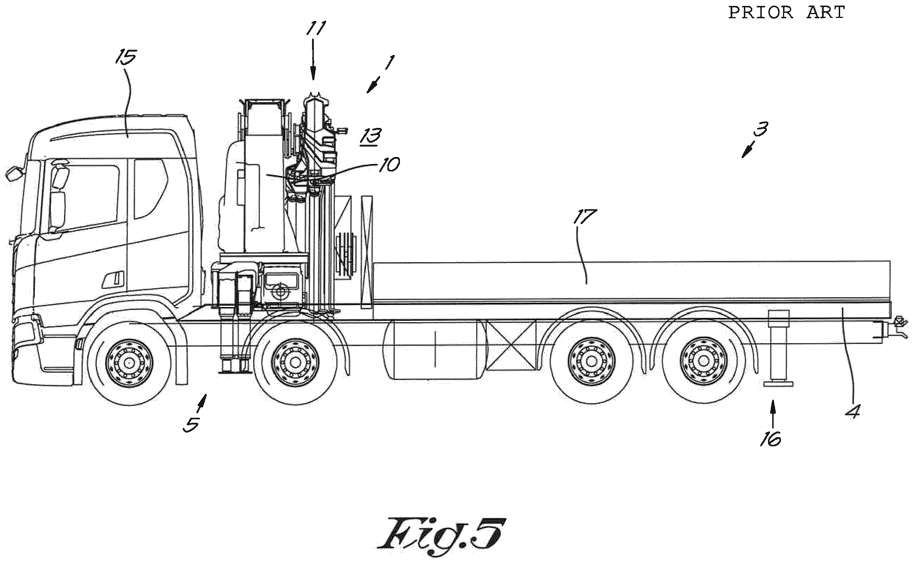

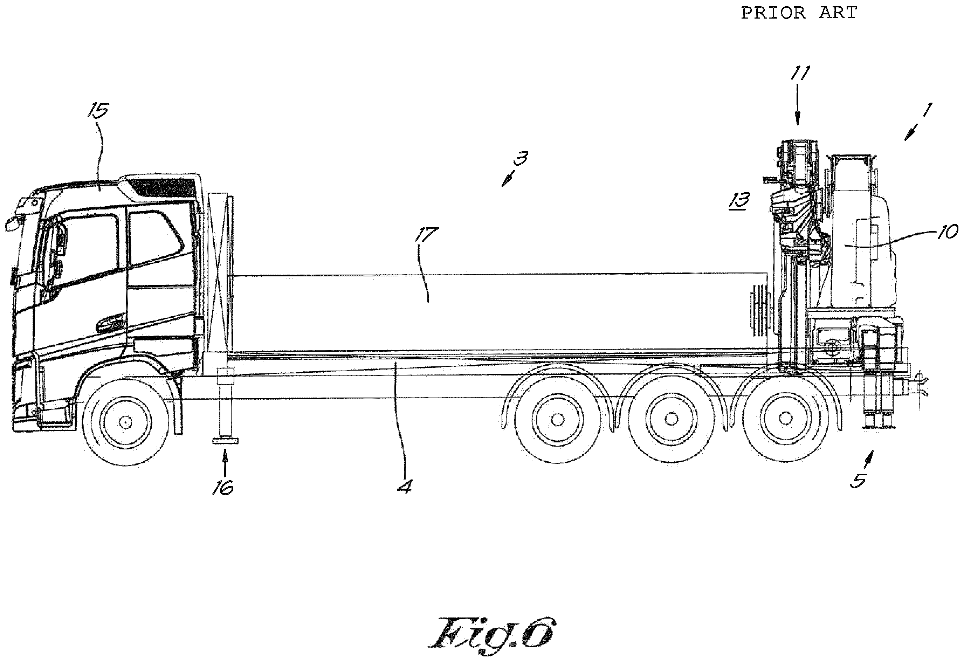

The self-loader crane 1 of the figures 1 to 4 is a conventional type with a bearing structure 2 for mounting the self-loader crane 1 in the known way transversely across the width of a truck 3 on the chassis 4 of the truck 3 as shown in figures 5 and 6.

The bearing structure 2 is provided with a first support leg unit 5 with hollow beams 6 with extendable beams 7 with support legs 8 and support feet 9 thereon, said beams 7 being laterally extendable in the transversal direction for outrigging the truck 1 when loading and unloading by extending the beams 7 and lowering the support feet 9.

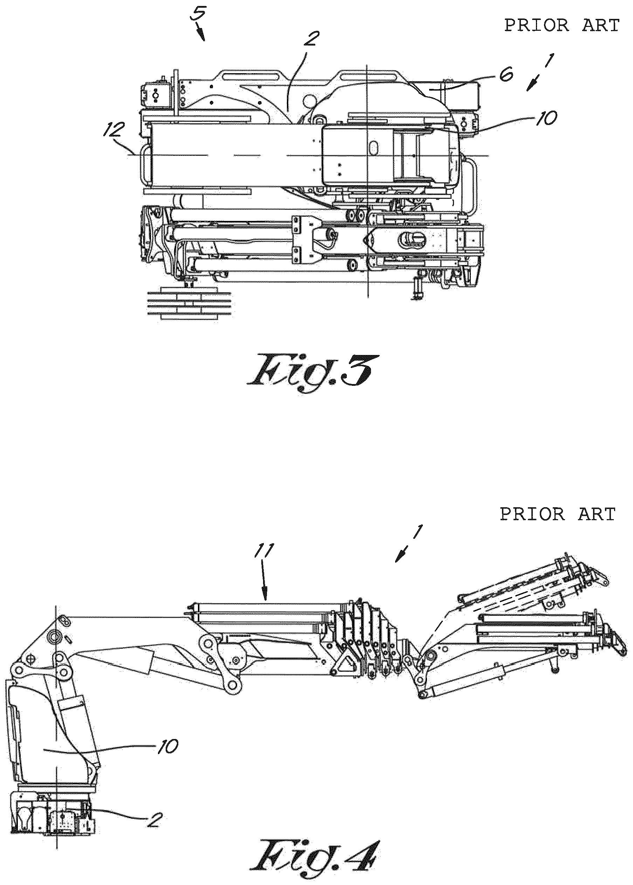

A crane column 10 is asymmetrically mounted on the bearing structure 2 relative to the centre on which an articulated foldable boom 11 is mounted which is foldable into a stowed position as shown in figures 1 to 3 and pivotable around an axis 12 and can be unfolded as partly shown in figure 4 to be able to hoist the loads.

In the stowed position, the boom 11 is folded up in the transversal direction of the truck 3, substantially parallel to the bearing structure 2 and the beams 6 of the support leg unit 5 and within the width of the truck 3.

The folded up boom 11 is located on one side of the crane column 10 which is referred to as the stowage side 13.

In a conventional self-loader crane the support leg unit 5 is located on the opposite side 14 of the stowage side 13 relative to the crane column 10.

The self-loader crane 1 has a mounting length A in the longitudinal direction of the truck 3 as shown in figure 1.

Such conventional self-loader crane 1 is traditionally front-mounted on the chassis 4, just behind the cab 15 as shown in figure 5, or alternatively completely rear-mounted as shown in figure 6 and a second support leg unit 16 is provided at a distance from the first support leg unit 5 belonging to the self-loader crane 1.

In the case of conventional front-mounting as shown in figure 5, typically the stowage side 13 of the crane column 10 is oriented to the rear, more specifically to the load area 17 and the first support leg unit 5 is located on the front side of the crane column 10 between the crane column 10 and the cab 15.

In the case of conventional rear-mounting as shown in figure 6, typically the stowage side 13 of the crane column 10 is oriented to the front, more specifically also to the load area 17 and the first support leg unit 5 is located on the rear side of the crane column 10, seen in the forward direction of travel of the truck 3.

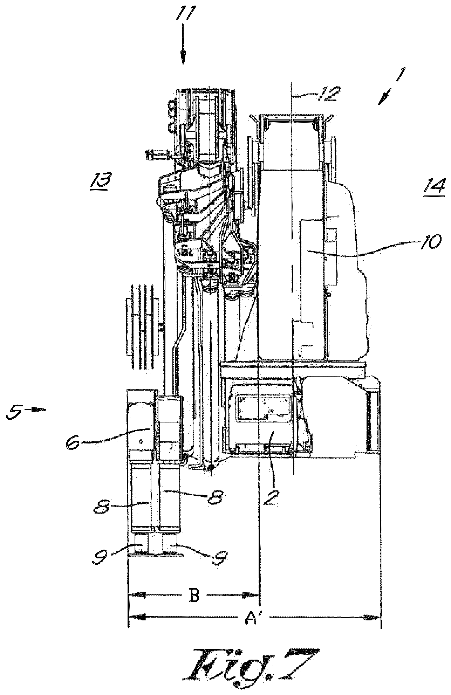

The self-loader crane 1 according to the invention as shown in figure 7 differs from the conventional self-loader crane 1 of figure 1 in terms of the position of the support leg unit 5 on the stowage side 13 of the crane column 10 instead of on the opposite side 14.

According to the invention, the support leg unit 5 is located wholly or partly under the folded up boom 11 with its associated mounting parts or completely next to it, and preferably as close as possible to the axis 12 of the crane column 10, but at the same time as far as necessary for achieving the required stability.

Thanks to the invention, mounting length A' of the crane 1 as shown in figure 7 is not much greater than mounting length A of the conventional crane 1 of figure 1, or the same, or less.

The support leg unit 5 can be integrated in the bearing structure 2 of the crane column 10 as shown in figure 7 or can be separate therefrom, but can be connected thereto for mounting on a truck 3 by an auxiliary frame which is not shown in the figures.

A self-loader crane 1 according to the invention as that of figure 7 can also be obtained by transformation of a conventional self-loader crane 1 as that of figure 1, whereby a replacement beam is provided for the beam 6 of the support leg unit 5 which is connected to the existing bearing structure 2 of the conventional self-loader crane 1, either directly or by means of the auxiliary frame, and whereby the extendable beams 7 with the support legs and support feet and the hydraulic operating cylinders are recovered from the conventional self-loader crane for mounting in and on the replacement beam.

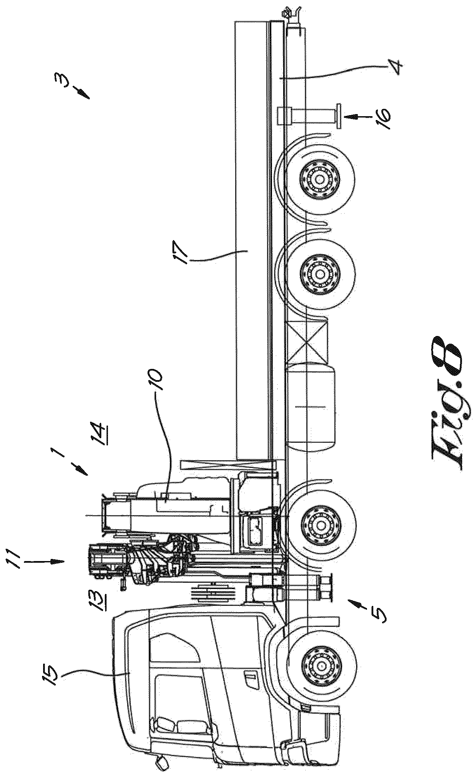

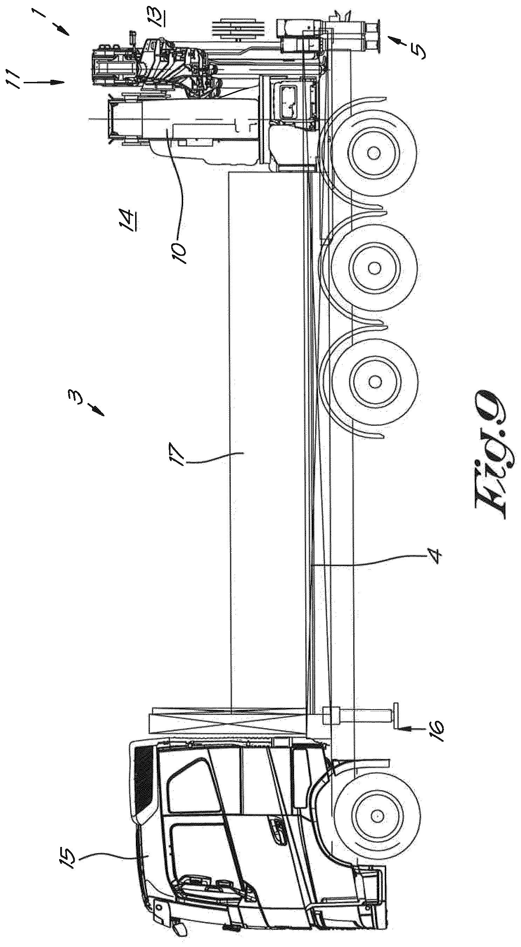

The self-loader crane 1 according to the invention is either front-mounted as shown in figure 8 or rear-mounted as shown in figure 9 with a second support leg unit 16 at the rear, respectively the front.

In the case that the self-loader crane 1 is front-mounted, said self-loader crane is positioned such that the stowage side 13 is oriented to the front toward the cab 15 and the front support leg unit 5 is also located on the stowage side 13 between the cab 15 and the crane column 10 relative to the crane column 10, in other words at the front of the crane column 10.

It is understood that in this case the support leg unit 5 is located further from the axis 12 of the crane column 10 in the longitudinal direction of the truck 3 than in the conventional situation, such that a greater forward stability is obtained.

In the case of rear-mounting, the stowage side 13 of the self-loader crane 1 is oriented to the rear in its stowed position and the rear support leg unit 5 of the self-loader crane 1 is located on the rear relative to the crane column 10, also with a greater distance between the support leg unit 5 and the axis 12 of the crane column 10 and thus with a better rearward stability.

The present invention is by no means limited to the embodiments described as an example and shown in the drawings, but a truck and self-loader crane according to the invention and use thereof can be realised in all kinds of forms and dimensions, without departing from the scope of the invention.

## Claims

1. Truck provided with a chassis (4) and a foldable hydraulic self-loader crane (1) and a front and a rear support leg unit (5-16) with support legs (8) on beams (7) which are slidably extendable and retractable laterally, substantially in the transversal direction of the truck (3), whereby the self-loader crane (1) is provided with a bearing structure (2) with which the self-loader crane (1) is mounted to the chassis (4) of the truck (1), either at the front behind the cab (15) or completely at the rear in the forward direction of travel, whereby the self-loader crane (1) is provided with a crane column (10) which is mounted pivotably on the bearing structure and is provided with an articulated boom (11) which is at least partially foldable in a stowed position next to the crane column (10) on the so-called stowage side (13) of the crane column (10), whereby the boom (11) is folded up transversely across the direction of travel of the truck (3),
**characterised in that:**
- in the case that the self-loader crane (1) is front-mounted, the stowage side (13) of the self-loader crane (1) in the stowed position is oriented to the front toward the cab (15) and the front support leg unit (5) is located on the stowage side (13) relative to the crane column (10) between the cab (15) and the crane column (10), and,
- in the case that the self-loader crane (1) is rear-mounted, the stowage side (13) of the self-loader crane (1) in its stowed position is oriented toward the rear and the rear support leg unit (5) is located on the stowage side (13) relative to the crane column (10).

2. Truck according to claim 1, **characterised in that** the beams of the support leg unit (5) enclose an angle between 80° and 100° with the longitudinal direction of the truck (3), preferably an angle of 90° or approximately 90°.

3. Truck according to claim 1 or 2, **characterised in that** the support leg unit (5) situated nearest to the crane column (10) is wholly, partially or not located under the folded up boom (11).

4. Truck according to claim 3, **characterised in that** the support leg unit (5) is located as closely as possible to the crane column (10) but at the same time is removed from the crane column (10) as far as possible as required for achieving the necessary stability.

5. Truck according to any one of the previous claims, **characterised in that** the truck (3) is only equipped with a front and a rear support leg unit (5,16), whereby in the case of a front-mounted loader crane (1), the front support leg unit (5) is located between the crane column (10) and the cab (15), and whereby in the case of a rear-mounted self-loader crane (1), the rear support leg unit (5) is located in the direction of travel behind the crane column (10).

6. Truck according to any one of the previous claims, **characterised in that** the support leg unit (5) nearest to the bearing structure (2) of the self-loader crane (1) is connected to the crane column (10) because it is integrated in the bearing structure (2) or fixedly connected thereto by an auxiliary frame that is mounted to the chassis (4).

7. Self-loader crane for mounting on a truck (3), whereby the self-loader crane (1) is provided with a bearing structure (2) for mounting the self-loader crane (1) on the truck (3), whereby the self-loader crane (1) is provided with a support leg unit (5) with support legs (9) to laterally retractable and extendable beams (7), and the self-loader crane (1) is further provided with a crane column (10) which is pivotably mounted on the bearing structure (2) and which is provided with an articulated boom (11) which is at least partially foldable in a stowed position next to the crane column (10) on the so-called stowage side (13) of the crane column (10), whereby in the stowed position the beams (7) of the support leg unit (5) are retracted and the boom (11) is folded up into a position parallel to the support leg unit (5),
**characterised in that:**
in the stowed position the support leg unit (5) is located on the stowage side (13) of the crane column (10).

8. Self-loader crane according to claim 7, **characterised in that** in the stowed position the support leg unit (5) is wholly, partially or not located under the folded up boom (11) .

9. Self-loader crane according to claim 8, **characterised in that** in the folded up stowed position the support leg unit (5) is located as closely as possible to the crane column (10) but at the same time is removed from the crane column (10) as far as necessary for achieving the required stability.

10. Self-loader crane according to any one of the claims 7 to 9, **characterised in that** the support leg unit (5) is integrated in the bearing structure (2).

11. Use of a self-loader crane (1) according to any one of the claims 7 to 9 for mounting on the chassis (4) of a truck (3), **characterised in that** the crane column (10) of the self-loader crane (1) is front-mounted on the chassis (4) just behind the cab (15) in such a way that in the stowed position of the self-loader crane (1), the folded up boom (11) and the support leg unit (5) are located between the crane column (10) and the cab (15).

12. Use of a self-loader crane (1) according to any one of the claims 7 to 9 for mounting on the chassis (4) of a truck (3), **characterised in that** the crane column (10) of the self-loader crane (1) is mounted completely at the rear on the chassis (4) such that, in the stowed position of the self-loader crane (1), the folded up boom (11) and the support leg unit (5) are located behind the crane column (10)seen in the direction of travel.

13. Use of a conventional self-loader crane (1) for obtaining a truck (3) according to any one of the claims 1 to 6, departing from a conventional self-loader crane (1) with a bearing structure (2) with which the self-loader crane (1) can be mounted on the truck (1) whereby the self-loader crane (1) is provided with a crane column (10) which is pivotably mounted to the bearing structure (2) and which is provided with an articulated boom (11) which is at least partially foldable into a stowed position next to the crane column (10) on the so-called stowage side (13) of the crane column (10) and the conventional self-loader crane (1) is further provided with a support leg unit on the other side of the crane column (10) and parallel to the folded up boom (11) in its stowed position, **characterised in that** said conventional self-loader crane (1):
- is either front-mounted on the chassis (4), just behind the cab (15) such that the self-loader crane (1) with its folded up boom (11) in stowed position is located between the crane column (10) and the cab (15) and a replacement support leg unit is further provided which is mounted transversely to the direction of travel between the crane column (10) and the cab (15);
- or completely rear-mounted on the chassis (4) in such a way that the stowage side (13) of the self-loader crane (1) is oriented to the rear and a replacement support leg unit is further provided which is mounted transversely to the direction of travel on the stowage side (13) of the crane column (10).

14. Use according to claim 13, **characterised in that** the replacement support leg unit is wholly, partially or not mounted under the folded up boom (11) on the chassis (4).

15. Use according to claim 13 or 14, **characterised in that** part of the support unit of the conventional self-loader crane (1) is recovered for the replacement support leg unit for mounting in the replacement support leg unit.
